# EUROPEAN PATENT SPECIFICATION

(11) **EP 3 236 118 B1**
(45) Date of publication and mention of the grant of the patent: **29.05.2019**
(21) Application number: 17166698.5
(22) Date of filing: 14.04.2017
(51) Int. Cl.: F16K 5/06, B65G 53/46

(54) **DROP ROTARY METERING VALVE**
DREHBARE FALL-MESSVENTILANORDNUNG
SOUPAPE DE DOSAGE ROTATIVE À CHUTE

(30) Priority: 18.04.2016 IT UA20162664
(43) Date of publication of application: 25.10.2017
(73) Proprietor: STERIVALVES S.R.L., 55100 Lucca (LU) (IT)
(72) Inventor: Nelli, Gianfranco, 55100 Lucca LU (IT); Pieri, Luciano, 55100 Lucca LU (IT)
(74) Representative: Fanfani, Stefano

(56) References cited:
- GB-A- 2 365 949
- US-A- 2 428 241
- US-A- 4 238 058

## Description

### Technical field

The present invention refers to the field of the metering devices for the pharmaceutical, chemical, and food industries.

More specifically, the valve according to the present patent application belongs to the sector of the drop metering devices used for a controlled discharge and a volumetric metering of loose solid products, such as powdered or granular products.

In particular, the scope of the present invention is a device capable of operating without having loss of pressure or vacuum, as referred to the piping where it is inserted, while providing simplicity and ease of internal cleaning as well as the capability of being disassembled without using tools. The metering devices of this type are usually driven by control devices, such as electric motors or the like; the speed of rotation of the rotor is usually rather low.

### Present status of the art

Metering devices are known for loose solid products which are composed of a box-like body or housing which receives internally thereto a rotor keyed onto a horizontal shaft.

The box-like body has an upper opening for putting the product in and a lower opening for discharging it. The internal rotor has a number of compartments featuring a V-shaped cross section and is engineered so that its external profile is very close to the inner surface of the box-like body, so that the product can go through the metering valve and enter first a compartment facing upwards, which is located in the upper part of the rotor, and subsequently go out after the rotor performs a half turn, while the same compartment is located in the lower part, facing downwards.

Document US 4238058 A discloses an example of a cylindrical rotary valve wherein the rotor is enclosed internally to a box-like body or housing, which comprises an upper closing element, a lower closing element, and two side discs located at the opposed ends of the first two elements.

Every side disc has a circumferential projection which is received in respective semi-circumferential grooves in each of the two closing elements. Tightness is achieved thanks to the reciprocal contact of the four elements that define the housing, without any possibility of inserting gaskets.

The cylindrical rotary valve comprises a shaft which extends axially and crosses two central and opposed openings, provided on the two side discs, dust protection gasket being interposed; a rotor is keyed onto the shaft.

The rotary valve there disclosed requires a big quantity of elements to compose the housing and makes it necessary to realize tight junctions between more than two elements, which cannot be simply solved with the use of rings of the o-ring type.

Document US 2428241 A proposes to improve the tightness of a rotary valve with respect to the external world through the addition of an element specifically shaped to develop from the inlet mouth of the housing up to brushing the walls of the chambers of the rotor, said element resting on the latter by gravity. In document US 2428241 A, the rotor comprises radial walls which define chambers which are laterally closed by discs. According to a preferred embodiment, the walls are made in one piece and, in any case, they depart from a central hub secured to the shaft by pivots.

When these devices are used in industrial sectors that require a high degree of sanitization and cleanliness, such as the chemical, food, and pharmaceutical industries and the like, it is very important that they can be cleaned up easily, to prevent any risks of contamination, bacterial loads, and the like.

The just described devices do not meet these requirements.

In particular, in said industrial sectors methods have been developed for a long time for cleaning the inner surfaces of pipes, tanks, process equipment, filters, and their respective accessories, without performing any disassembling operation, but just using appropriate flushings of water or other products suitable for removing the traces of the material that crossed the system. It is therefore necessary to prevent that internally to the device there are recesses, difficult to wash and to keep clean.

Also, should these devices have to be removed from the system and subsequently be opened to be cleaned up inside, it is advisable that this can be performed easily and that the disassembling and the subsequent re-assembling operations do not require any skilled operators or special tools.

In addition, these devices shall provide a high tightness towards the external world.

In general, it is not recommended that the flange used to join the cap to the box-like body or housing divides the latter upon crossing the bores that receive the shaft, both because this solution would jeopardize the tightness capabilities of the device, and because it would render it difficult and expensive to manufacture.

For this reason, usually the box-like body includes two bores which the rotor holding shaft rotationally engages and, in a position independent from the bores of the shaft, also presents a flanged cap through which the rotor is inserted, afterwards the shaft is inserted into the box-like body by making it engage itself internally to the rotor.

However, this solution makes recesses unavoidable in the coupling between the shaft and the rotor and also makes it difficult to position the cap seal in such a way as that latter is in contact with the product and does not occupy a position retracted and difficult to keep clean.

### Objects and summary of the invention

A first object of the present invention is to provide a metering device for loose solid materials that can be easily washed without being obliged to remove it from the system where it is installed.

A further object is to provide a device that is easy and inexpensive to manufacture.

A further object of the present invention is to provide a metering device that can be disassembled easily and without any need for specific tools.

These objects and others that will be apparent to those skilled in this art after reading the following description are achieved by a radial metering valve of an innovative type whose box-like body consists of two half-shells, equal to each other in a preferred embodiment, such as to receive internally thereto a monobloc rotor, integrated with the shaft that supports it.

The two half-shells being identical is very advantageous from the manufacturing process point of view and the possibility of manufacturing the rotor in one piece together with the shaft prevents the presence of recesses that unavoidably would form when the latter two elements are made up of two separate pieces, to be subsequently coupled together while assembling the valve.

The inner surface of the box-like body defines a sphere whose dimensions are little greater than those of the rotor which defines compartments for the material to be metered, typically having a V-shaped cross section, and is engineered in such a way that its external profile is very close to the inner surface of the box-like body; the latter includes an upper flange and a lower flange, for the inlet and the outlet of the material to be metered respectively; in an intermediate position between said two flanges, the box-like body presents two bores, coaxial along a horizontal axis, from which two tubular elements develop outwardly, each of which defines internally thereto a cavity symmetrical with respect to said horizontal axis.

The union plane of the two half-shells that form the box-like body is oblique with respect to the horizontal axis of rotation of the rotor. Each half-shell comprises either inlet/outlet flange and either tubular element, and one end of the shaft integrated with the rotor rotationally engages each of the tubular elements.

Usually the inlet and outlet flanges have a vertical axis.

The engagement of the end of the shaft in the cavity defined by the tubular element takes place through the interposition of a rotation and seal assembly which can be shaped in a variety of ways, a particularly advantageous solution consisting of using a rolling bearing coupled with a special bush.

In most cases, the geometries of the rotor and of the half-shells do not allow to insert the rotor into the tubular elements by simply making it slide; it might be required that it has to be tilt or handled otherwise. To make it possible an easy assembling of the monobloc rotor internally to the valve body, it is consequently necessary that the inner diameter and the internal length of the tubular elements be such as to allow a loose insertion of the ends of the rotor during the assembling operations.

Having positioned the rotor internally to the box-like body, the latter is closed and the two half-shells are joined to each other, advantageously through the interposition of seals of a known type such as, for instance, an o-ring.

Subsequently the rotor is lined-up and held definitely in position thanks to the insertion of the rotation and seal assemblies in the axially-symmetrical gaps defined by the inner lateral surface of the tubular elements and by the outer lateral surface of the ends of the rotor itself.

The rotation and seal assemblies are thus inserted onto the ends of the rotor by operating from outside and making them slide within the cylindrical cavity internal to the tubular element.

According to a particularly advantageous embodiment, the lateral surfaces of both tubular elements include a respective channel above and below to make it possible to inject and discharge the fluids used to internally clean the metering valve; said channels are thus preset for being connected to an external washing system, for instance via fittings of a type normally used for connecting pipings.

In a preferred embodiment of the invention, the two half-shells reciprocally engage each other by way of appropriate flanges suitable for being coupled by way of union means of a known type and through the interposition of gaskets suitable for providing a tight coupling.

In a simple and practical solution, the flanges are of a type that is joined by way of clamping collars that can be opened and closed by hand, without any need for using tools. In this case, the reciprocal positioning of the two half-shells takes place by way of appropriate centering means, such as, for example, reference plugs inserted into appropriate bores present on the coupling edge of the half-shells or by way of the centering rings.

The coupling edges of the two half-shells are properly shaped to make it possible the accommodation of a seal.

According to a convenient and practical embodiment, the ends of both said tubular elements have external flanges preset for being coupled with other flanges of the same type by way of means of union of a known type.

The use of these flanges located at the external ends of the two tubular elements makes it possible to connect respective closing elements, the assembling of which helps in holding the bushes and the bearings of the rotation and seal assemblies in position.

Usually either closing element is blind whereas the other is open and makes it possible for one end of the shaft to get out, to make it possible for this end to be coupled with a correspondent driving assembly such as, for instance, a motor.

In a particularly advantageous embodiment, all couplings are implemented by using clamping collars of a type that can be opened and closed manually, so that the complete metering valve can be removed from the system and even opened without being obliged to use any tools.

Very advantageously can the special bushes interposed between the ends of the shaft and the inner surface of the tubular bodies be equal to each other, which entails evident advantages in terms of cost effectiveness and ease of manufacturing.

The special bushes generally include lip seals and can be shaped in different ways depending on the functions the metering valve shall perform. Configurations can be provided wherein the bushes are integral with the ends of the rotor and rotate with respect to the box-like body, whereas in other configurations the bushes are static with respect to the box-like body.

Owing to their characteristic, lip seals offer a resistance to the passage of fluids in one sense, whereas they allow the passage thereof in the opposed sense.

Depending on the number and on the type of gaskets mounted, it is possible to implement configurations of the seals specifically aiming at containing internal pressure only or at withstanding both internal pressure and internal vacuum as well as at allowing washing and sterilization of the valve and of the seals.

In those configurations wherein a washing and/or sterilization step is provided for, the cleaning cycle starts with the pressurized washing fluid entering the valve and the seals, through at least one of the channels present in the tubular element.

After a first step, the internal washing stops, which is followed by a washing of the seals. In this step, part of the washing fluid goes beyond a lip seal and spills over to inside the valve and is subsequently removed through the discharge flange of the valve itself. This cycle can go on alternately until the valve is completely cleaned up, without having disassembled it from the system. The same cycle can be performed by using steam to sterilize the valve.

After the washing and/or sterilization step, it is possible to dry the inside of the valve by using pressurized hot air which is injected into the seals and internally to the valve through the same inlet and outlet as used for washing.

By using the same configuration of the seals as used for washing, it is also possible to perform an inertization, by injecting slightly pressurized nitrogen into the valve, and it is also possible to create a pneumatic-like barrier to the dust that is present inside the valve, by introducing a slightly pressurized air thereinto.

By using the complete configuration, it is also possible to monitor the status of the seals, by alternately pressuring or putting under vacuum the above described circuits.

In a solution using bushes integral with the box-like body, lip seals are used in co-operation with gaskets having a rectangular cross section.

### Brief description of the drawings

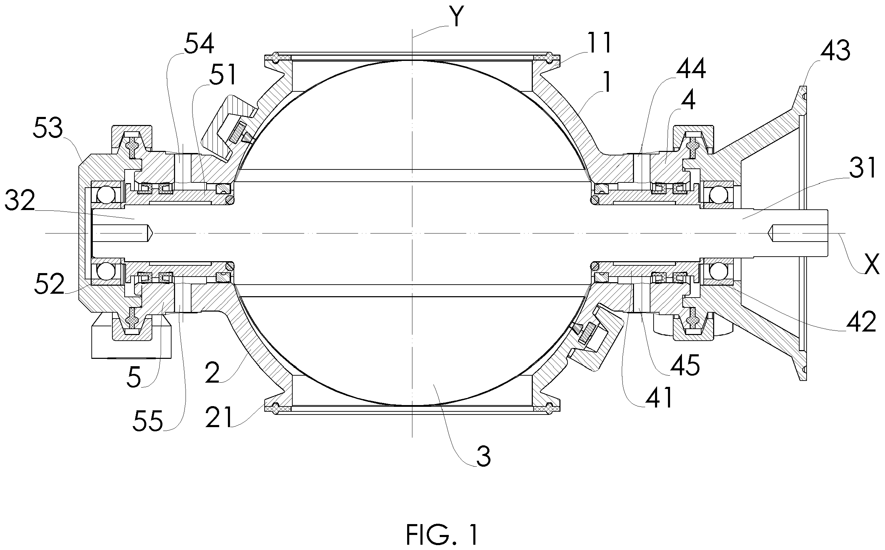

**Figure 1** shows a vertical longitudinal cross section of a possible embodiment of the metering valve according to the present patent application; the figure shows an upper half-shell (1) and a lower half-shell (2), a rotor integrated with a shaft (3) whose axis is identified by an X, a right tubular element (4) which develops on the outer surface of the upper half-shell (1), and a left tubular element (5) which develops on the outer surface of the lower half-shell (2) .
   On the upper part of the upper half-shell (1) there is visible a flanged opening (11) from which the loose material is put in, whereas on the lower part of the lower half-shell (2) it is visible a flanged opening (21) through which the material is discharged. In the configuration shown in the figure, both flanged openings (11, 21) feature one and the same vertical axis Y.
   Internally to said tubular elements (4, 5) there are visible bushes (41, 51) and rolling bearings (42, 52).
   At the ends of said tubular elements (4, 5) there are visible closing elements (43, 53); the closing element (43) is of an open type and makes it possible to couple the device with a motor, whereas the closing element (53) is of a blind type.
   In each tubular element (4, 5) there are visible their respective inlet channels (44, 54) and outlet channels (45, 55) used for washing and sterilization operations. Clamping collars are visible, which are used to couple the two half-shells (1, 2) together and to join the closing elements (43, 53).

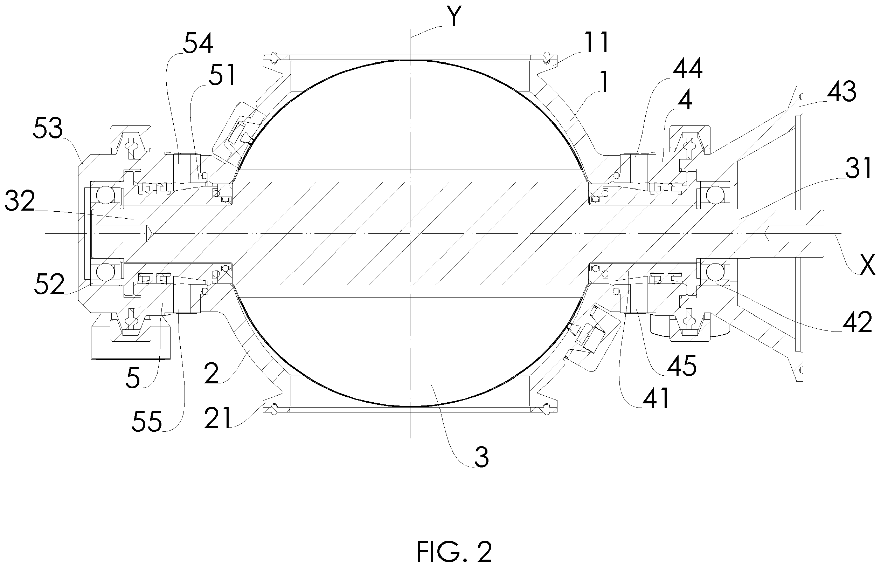

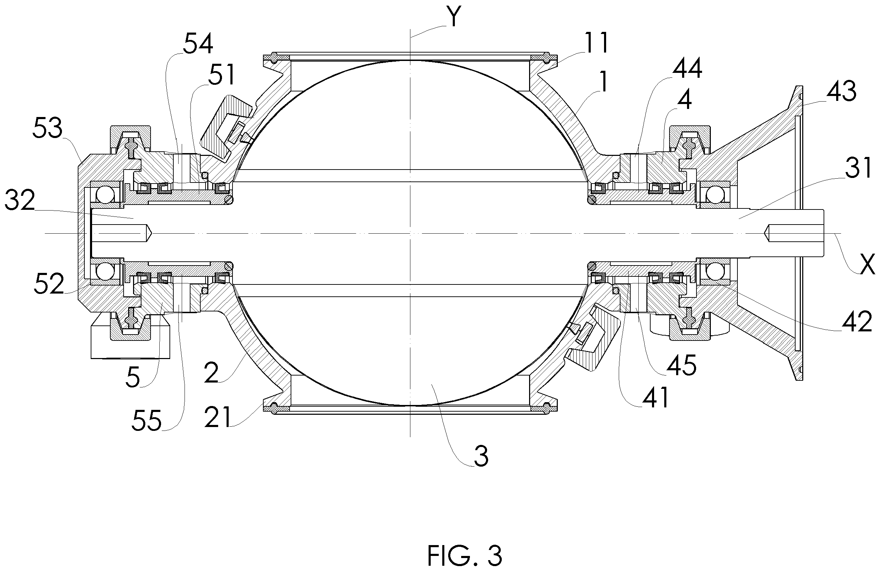

**Figure 2** and **figure 3** show each a vertical longitudinal cross section of the metering valve, the bushes (41, 51) being implemented in different ways and according to a different configuration of the seals. In these construction options the tubular elements (4, 5) are not made up of one piece along with their respective half-shell (1, 2), but they are separate pieces which are joined to the half-shells by using techniques of a known type, if necessary through the interposition of appropriate gaskets.

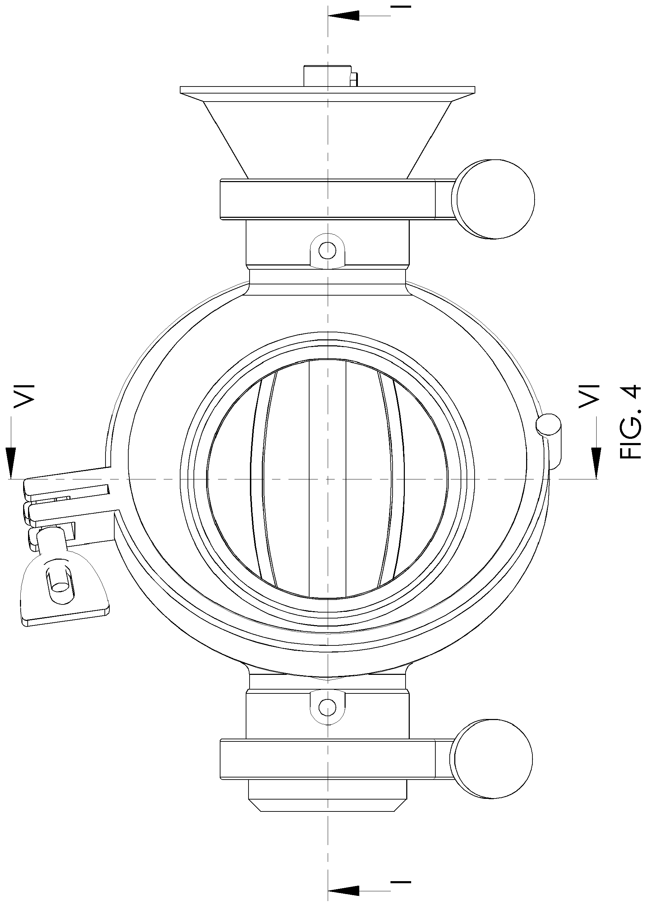

**Figure 4** shows a top view of the metering valve after being assembled.

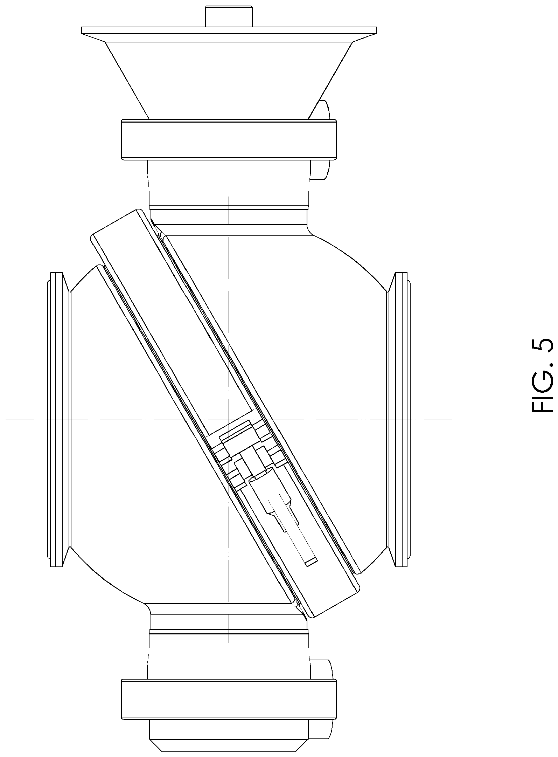

**Figure 5** shows a side view of the metering valve after being assembled.

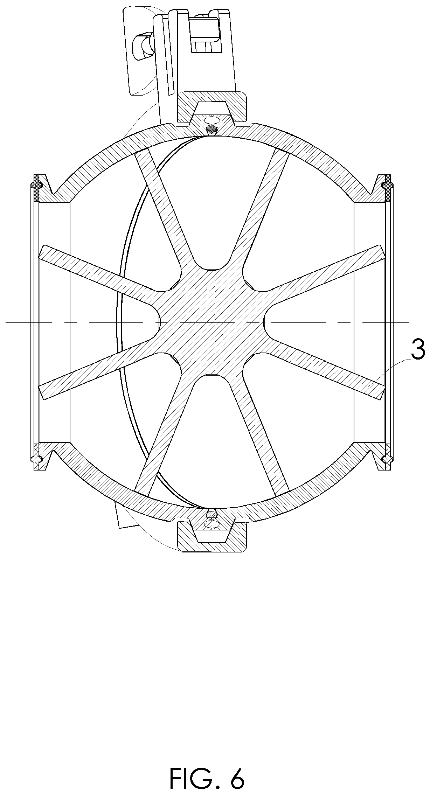

**Figure 6** shows a vertical cross sectional view of the metering valve, which highlights the rotor and the compartments featuring a V-shaped cross section.
**Figure 7** thru **figure 12** show an assembling sequence for an embodiment of the invention. This sequence allows to emphasizes how the assembling and disassembling operations can be performed by unskilled operators without any need for them of using special tools. The sequence also shows how the characteristics of claim 1 make it possible to implement a metering valve without any recesses due to the coupling between the rotor and the shaft and featuring high tightness degrees with respect to the external world, thanks to the coupling between the elements that are thus created.

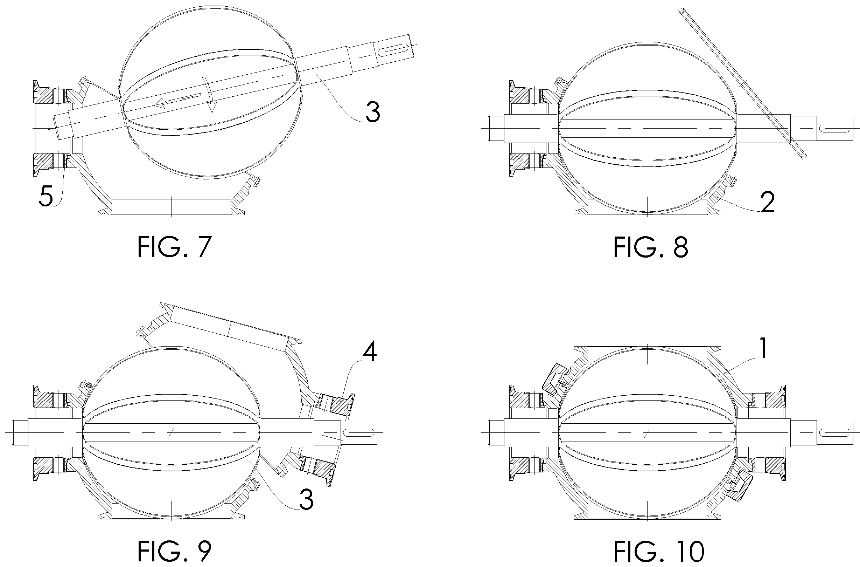

Figure 7 and figure 8 show the insertion of the monobloc metering rotor (3) into the tubular element (5) projecting from the lower half-shell (2), on the surface of which facing the upper half-shell (1) a circular seal is put. Then, figure 9 and figure 10 show the coupling between the half-shells by way of a collar, after the monobloc rotor (3) crosses the tubular element (4) that projects from the upper half-shell (1).

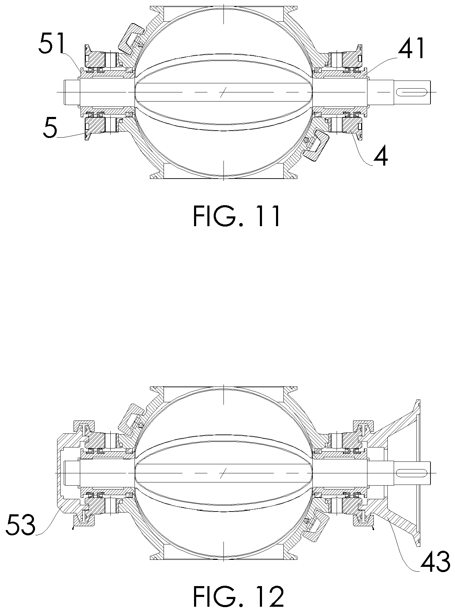

As shown in figure 11, the rotation and seal assemblies positioned at the two ends of the rotor (3) are inserted from the outside, by making the elements slide internally to the tubular elements.

Finally, the closing elements (43, 53) are placed at the ends of the tubular elements (4, 5), by way of appropriate collars, as shown in figure 12.

### Detailed description of an embodiment of the invention

In a particularly complete embodiment, the rotary metering valve according to the present patent application comprises a box-like body, internally spheroidal, resulting from joining an upper half-shell (1), which has an upper opening (11) for putting loose material in, and a lower half-shell (2), which has a lower opening (21) for discharging the material; both said openings are flanged to make it possible for them to be connected to the system and are coaxial to each other along a vertical axis Y; laterally, the box-like body has two tubular elements (4, 5), coaxial to each other along a horizontal axis X, which project from said upper half-shell (1) and from said lower half-shell (2) respectively.

According to an advantageous construction option, the two half-shells are equal to each other.

The box-like body accommodates internally thereto a metering rotor (3), very advantageously formed of one piece and whose ends (31, 32) are rotationally coupled internally to said tubular elements (4, 5) through the interposition of respective bushes (41, 51) and respective rolling bearings (42, 52).

The two half-shells (1, 2) are joined together along a surface that is oblique with respect to the axis X of the rotor (3) as well as to the vertical axis Y.

The centering between the two half-shells (1, 2) takes place by way of means of a known type such as, for instance dowel pins or centering rings; very advantageously are the union edges of the two half-shells shaped in such a way as to make it possible a reciprocal coupling by way of devices of a known type that do not require the use of any tools such as, for instance, clamping collars.

In one construction option, the edges of both half-shells have bores intended for accommodating cylindrical plugs suitable for engaging their corresponding bores in the other half-shell.

The external edges of said tubular elements (4, 5) are closed by respective closing elements (43, 53).

In accordance with a possible embodiment of the rotary metering valve according to the present invention, the tubular elements (4, 5) are not made up of one piece together with their respective half-shell (1, 2), but they are separate pieces which are joined to the half-shells by using techniques of a known type, such as screws or others; if necessary, through the interposition of appropriate gaskets.

To make it possible an internal washing of the valve, the tubular elements (4, 5) include respective inlet channels (44, 54) and outlet channels (45, 55) which are used for injecting the fluids used for washing or for sterilization.

Between each of said bushes (41, 51) and their respective cylindrical cavities internal to said tubular elements (4, 5) which receive them, there are placed seals, some of which are of a static type, featuring a circular cross-section, called o-rings, and others are rotary, of a lip type. Gaskets having a rectangular cross-section might also be used, typically made from a self-lubricating material.

## Claims

1. A drop rotary metering valve, comprising an internally spheroidal, box-like body, resulting from joining an upper half-shell (1), which defines an upper inlet opening (11), and a lower half-shell (2), which defines a lower discharge opening (21); internally to said box-like body there is housed a monobloc metering rotor (3), which includes compartments for accommodating the material to be metered and is engineered in such a way that its external profile is very close to the inner surface of the box-like body, whose ends (31, 32) are rotationally coupled together internally to two tubular elements (4, 5), coaxial to said rotor (3) along an axis X, which laterally projects from said upper half-shell (1) and from said lower half-shell (2) respectively, said half-shells being coupled along a surface oblique with respect to said axis X, the outer ends of said tubular elements (4, 5) being coupled with respective closing elements (43, 53); the seal and rotational coupling of said ends (31, 32) internally to said tubular elements (4, 5) takes place thanks to the interposition of rotation and seal assemblies in the axially-symmetrical gaps defined by the inner lateral surface of said tubular elements (4, 5) and by the outer lateral surface of said ends (31, 32) of said monobloc metering rotor (3).

2. A metering valve according to the previous claim, **characterized in that** each of said rotation and seal assemblies is configured in such a way that it can be inserted from the outside inwards.

3. A metering valve according to the previous claim 1 or 2, **characterized in that** each of said rotation and seal assemblies comprises at least one special bush (41, 51).

4. A metering valve according to any of the previous claims, **characterized in that** each of said rotation and seal assemblies comprises at least one rolling bearing (42, 52) .

5. A metering valve according to any of the previous claims, **characterized in that** said half-shells (1, 2) are equal to each other.

6. A metering valve according to any of the previous claims, **characterized in that** said half-shells are coupled together by way of reciprocal centering means of a known type, for instance dowel pins or centering rings.

7. A metering valve according to any of the previous claims, **characterized in that** said half-shells are coupled together by way of clamping collars.

8. A metering valve according to claim 3 or any of the previous claims dependent thereon, **characterized in that** said bushes (41, 51) are equal to each other.

9. A metering valve according to claim 3 or any of the previous claims dependent thereon, **characterized in that** between each of said bushes (41, 51) and their respective cylindrical cavities internal to said tubular elements (4, 5) that receive them there are located seals.

10. A metering valve according to the previous claim 8, **characterized in that** said seals comprise lip seals.

11. A metering valve according to any of the previous claims, **characterized in that** said tubular elements (4, 5) present respective inlet (44, 54) and outlet (45, 55) channels used for washing or sterilization operations.

## Patentansprüche

1. Drehbare Fall-Messventilanordnung, umfassend einen innenseitig kugelförmigen kastenähnlichen Körper, resultierend aus dem Kuppeln einer oberen Halbschale (1), die eine obere Einlassöffnung (11) definiert, und einer unteren Halbschale (2), die eine untere Auslassöffnung (21) definiert, wobei innenseitig im kastenähnlichen Körper ein Messrotor (3) in Monoblockbauweise untergebracht ist, der Unterteilungen für die Aufnahme des zu messenden Materials einschließt und der so konzipiert ist, dass sein außenseitiges Profil sehr nah an der innenseitigen Oberfläche des kastenähnlichen Körpers befindlich ist, dessen Enden (31, 32) rotatorisch innenseitig mit zwei Rohrelementen (4, 5) gekuppelt sind, koaxial zum Rotor (3) entlang einer X-Achse, die seitlich jeweils von der oberen Halbschale (1) und von der unteren Halbschale (2) hervorsteht, wobei die Halbschalen entlang einer Oberfläche gekuppelt sind, die schräg zur X-Achse verläuft, wobei die äußeren Enden der Rohrelemente (4, 5) mit jeweiligen Verschlusselementen (43, 53) gekuppelt sind, wobei die Dichtung und rotatorische Kupplung dieser Enden (31, 32) innenseitig mit den Rohrelementen (4, 5) dank des Einsetzens von Rotations- und Dichtungsanordnungen in die axialsymmetrischen Lücken stattfindet, definiert durch die innere seitliche Oberfläche der Rohrelemente (4, 5) und durch die äußere seitliche Oberfläche der Enden (31, 32) des Messrotors (3) in Monoblockbauweise.

2. Messventil nach dem vorhergehenden Anspruch, **dadurch gekennzeichnet, dass** eine jede der Rotations- und Dichtungsanordnungen so ausgelegt ist, dass sie von außen nach innen eingesetzt werden kann.

3. Messventil nach dem vorhergehenden Anspruch 1 oder 2, **dadurch gekennzeichnet, dass** eine jede der Rotations- und Dichtungsanordnungen mindestens eine Spezialbuchse (41, 51) umfasst.

4. Messventil nach einem der vorhergehenden Ansprüche, **dadurch gekennzeichnet, dass** eine jede der Rotations- und Dichtungsanordnungen mindestens ein Kugellager (42, 52) umfasst.

5. Messventil nach einem der vorhergehenden Ansprüche, **dadurch gekennzeichnet, dass** die Halbschalen (1, 2) einander gleichen.

6. Messventil nach einem der vorhergehenden Ansprüche, **dadurch gekennzeichnet, dass** die Halbschalen mittels gegenseitiger Zentriermittel eines bekannten Typs, beispielsweise Passstiften oder Zentrierringen, miteinander gekuppelt sind.

7. Messventil nach einem der vorhergehenden Ansprüche, **dadurch gekennzeichnet, dass** die Halbschalen mittels Klemmringen miteinander gekuppelt sind.

8. Messventil nach Anspruch 3 oder einem der vorhergehenden Ansprüche, die von diesem abhängen, **dadurch gekennzeichnet, dass** die Buchsen (41, 51) einander gleichen.

9. Messventil nach Anspruch 3 oder einem der vorhergehenden Ansprüche, die von diesem abhängen, **dadurch gekennzeichnet, dass** sich zwischen einer jeden der Buchsen (41, 51) und deren entsprechenden zylindrischen Hohlräumen in den Rohrelementen (4, 5), die diese aufnehmen, Dichtungen befinden.

10. Messventil nach dem vorhergehenden Anspruch 8, **dadurch gekennzeichnet, dass** die Dichtungen Lippendichtungen umfassen.

11. Messventil nach einem der vorhergehenden Ansprüche, **dadurch gekennzeichnet, dass** die Rohrelemente (4, 5) jeweilige Einlasskanäle (44, 54) und Auslasskanäle (45, 55) aufweisen, die für Reinigungs- und Sterilisierungsvorgänge genutzt werden.

## Revendications

1. Soupape de dosage rotative à chute, comprenant un corps en forme de boîte, spheriforme à l'intérieur, obtenu de l'union d'une demi-coquille supérieure (1), laquelle définit une ouverture supérieure d'entrée (11), et d'une demi-coquille inférieure (2), laquelle définit une ouverture inférieure de sortie (21) ; à l'intérieur dudit corps en forme de boîte est logé un rotor de dosage monobloc (3), lequel inclut des compartiments pour accueillir le matériel à doser et est dimensionné de telle façon que son profil extérieur est très proche de la surface interne du corps en forme de boîte, dont les extrémités (31, 32) sont accouplées d'une façon rotationnelle à l'intérieur de deux éléments tubulaires (4, 5), coaxiaux audit rotor (3) le long d'un axe X, lesquels font saillie latéralement respectivement de ladite demi-coquille supérieure (1) et de ladite demi-coquille inférieure (2), lesdites coquilles étant accouplées suivant une surface oblique par rapport audit axe X, les extrémités externes desdits éléments tubulaires (4, 5) étant accouplés à des éléments de fermeture (43, 53) respectifs; l'étanchéité et l'accouplement rotationnel desdites extrémités (31, 32) à l'intérieur desdits éléments tubulaires (4, 5) se produisent par l'interposition d'ensembles de rotation et étanchéité dans les interstices axiaux symétriques définis par la surface latérale interne desdits éléments tubulaires (4, 5) et par la surface latérale externe desdites extrémités (31, 32) dudit rotor de dosage monobloc (3).

2. Soupape de dosage selon la revendication précédente **caractérisée en ce que** chacun desdits ensembles de rotation et étanchéité est configuré de telle façon à pouvoir être inséré de l'extérieur vers l'intérieur.

3. Soupape de dosage selon la revendication précédente 1 ou 2, **caractérisée en ce que** chacun desdits ensembles de rotation et étanchéité comprend au moins une douille spéciale (41, 51).

4. Soupape de dosage selon l'une quelconque des revendications précédentes **caractérisée en ce que** chacun desdits ensembles de rotation et étanchéité comprend au moins un coussinet de roulement (42, 52).

5. Soupape de dosage selon l'une quelconque des revendications précédentes, **caractérisée en ce que** lesdites demi-coquilles (1, 2) sont identiques.

6. Soupape de dosage selon l'une quelconque des revendications précédentes **caractérisée en ce que** lesdites demi-coquilles sont accouplées par l'intermédiaire de moyens de centrage réciproque d'un type connu, par exemple des fiches ou des bagues de centrage.

7. Soupape de dosage selon l'une quelconque des revendications précédentes **caractérisée en ce que** lesdites demi-coquilles sont accouplées par l'intermédiaire de colliers de butée.

8. Soupape de dosage selon la revendication 3 ou l'une quelconque des revendications précédentes dépendant d'elle, **caractérisée en ce que** lesdites douilles (41, 51) sont identiques.

9. Soupape de dosage selon la revendication 3 ou l'une quelconque des revendications précédentes dépendant d'elle, **caractérisée en ce que** des garnitures d'étanchéité sont placées entre chacune desdites douilles (41, 51) et les cavités cylindriques correspondantes à l'intérieur desdits éléments tubulaires (4, 5) qui les reçoivent.

10. Soupape de dosage selon la revendication précédente 8, **caractérisée en que** lesdites garnitures comprennent des garnitures à lèvre.

11. Soupape de dosage selon l'une quelconque des revendications précédentes **caractérisée en ce que** lesdits éléments tubulaires (4, 5) présentent des canaux d'entrée (44, 54) et de sortie (45, 55) respectifs utilisés pour les opérations de lavage ou de stérilisation.
